(19)
Europäisches
Patentamt
European
Patent Office
Office européen
des brevets

(11) **EP 4 549 611 A1**

(12) **EUROPEAN PATENT APPLICATION**
published in accordance with Art. 153(4) EPC

(43) Date of publication:
**07.05.2025 Bulletin 2025/19**

(21) Application number: **23830766.4**

(22) Date of filing: **06.04.2023**

(51) International Patent Classification (IPC):
***C23C 2/06*** *(2006.01)* ***C22C 18/04*** *(2006.01)*
***E01F 15/04*** *(2006.01)*

(52) Cooperative Patent Classification (CPC):
**C22C 18/04; C23C 2/06; E01F 15/04**

(86) International application number:
**PCT/JP2023/014253**

(87) International publication number:
**WO 2024/004312 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.06.2022 JP 2022105942**

(71) Applicant: **NIPPON STEEL CORPORATION**
**Chiyoda-ku**
**Tokyo 100-8071 (JP)**

(72) Inventors:
- **UENO, Shin**
  **Tokyo 100-8071 (JP)**
- **SHOJI, Hiromasa**
  **Tokyo 100-8071 (JP)**
- **KOBAYASHI, Akinobu**
  **Tokyo 100-8071 (JP)**
- **YAMASHITA, Satoru**
  **Tokyo 100-8071 (JP)**

(74) Representative: **Vossius & Partner**
**Patentanwälte Rechtsanwälte mbB**
**Siebertstrasse 3**
**81675 München (DE)**

(54) **GUARD RAIL BEAM**

(57) Provided is a guard rail beam comprised of a coated steel material comprising a steel material and coating layer formed on both surfaces of the steel material and made of a Zn-based coating, wherein at least one edge face of the steel material is covered by the coating layer and satisfies $0.60\times tc \leq te < tc$, $We \geq Wc$, and $Wt \geq Wc$ (tc is an average sheet thickness (mm) of the steel material at a position inside from the edge face covered by the coating layer by 10 mm or more, te is an average sheet thickness (mm) of the steel material at a position of 1 to 10 mm from the edge face covered by the coating layer, We is an average thickness ($\mu$m) per surface of the coating layer at a position of 1 to 10 mm from the edge face covered by the coating layer, Wc is an average thickness ($\mu$m) per surface of the coating layer at a position inside from the edge face covered by the coating layer by 10 mm or more, and Wt is an average thickness ($\mu$m) of the coating layer at the edge face covered by the coating layer).

Fig. 1
A
B
1
2
We
Wc
4
te
tc
3
Wt
REFERENCE POSITION OF END FACE

EP 4 549 611 A1

## Description

FIELD

The present invention relates to a guard rail beam.

BACKGROUND

A guard rail is generally comprised of a wavy cross-section guard rail beam and support posts. Sometimes, in the guard rail beam, a coated steel material is used. As coating treatment in the coated steel material, for example, there are pre-coating for coating a steel sheet in advance and post-coating for coating a steel sheet after processing the product (also sometimes called hot-dip coating).

Regarding pre-coating treatment, for example, PTL 1 teaches that when wiping a coated steel strip, the amount of deposition of the coating metal becomes greater at the edge parts of the steel strip and that as a result "edge overcoating", which can cause poor flatness and other poor quality, occurs, and therefore it is possible to supply a preheated auxiliary wiping gas from auxiliary wiping nozzles facing the edge parts of the coated steel strip to adjust the amount of deposition of the coating metal and prevent the occurrence of edge overcoating, etc., at the coated steel strip.

[CITATIONS LIST]

[PATENT LITERATURE]

[PTL 1] Japanese Unexamined Patent Publication No. 6-122953

SUMMARY

[TECHNICAL PROBLEM]

If using, for example, a coated steel material which has been post-coated as a guard rail beam, it is necessary to first work a steel sheet into the finished product, then transport the worked finished product and then post-coat it. Therefore, post-coating treatment requires a lot of work and is also expensive. On the other hand, in the case of pre-coating treatment such as described in PTL 1, the coating is performed in advance, and therefore coating after being worked is not necessary. There is the advantage that compared with post-coating treatment, the cost can be reduced. However, pre-coating treatment generally results in less of an amount of coating deposition compared with post-coating treatment and therefore sometimes is inferior in corrosion resistance. Further, in pre-coating treatment, end parts cut by a slitter, etc., are not covered by the coating, and therefore compared with post-coating treatment where the coating is performed after being worked, there is the problem that corrosion easily occurs from such end parts.

Even if studying utilizing the edge parts of pre-coated steel materials which have not been cut for guard rail beams, it is necessary to solve the problem of poor flatness and other poor quality due to edge overcoating such as described in PTL 1 while achieving the high corrosion resistance demanded in guard rail beams generally used in relative harsh environments outdoors and the related longer service life. This is extremely difficult.

The present invention was made considering the above and has as its object to provide a guard rail beam with improved corrosion resistance by a novel constitution.

[SOLUTION TO PROBLEM]

The inventors engaged in studies to achieve the above object while focusing on the structure of the relatively easily corroded end part of a guard rail beam. As a result, the inventors made the steel material to be used for a guard rail beam thinner in a predetermined range at an end part and made the coating layer in the predetermined range relatively thicker and discovered further that by making the coating layer of the edge face relatively thicker, it is possible to remarkably inhibit or prevent the occurrence of corrosion at the end parts of the guard rail beam and thereby completed the present invention.

The present invention able to achieve this object is as follows:

(1) A guard rail beam comprised of a coated steel material comprising a steel material and a coating layer formed on both surfaces of the steel material and made of a Zn-based coating, wherein
at least one edge face of the steel material is covered by the coating layer and satisfies following Formulas 1 to 3:

$$0.60\times tc \le te < tc \quad \cdots \quad \text{Formula 1}$$

$$We \ge Wc \quad \cdots \quad \text{Formula 2}$$

$$Wt \ge Wc \quad \cdots \quad \text{Formula 3}$$

where

tc is an average sheet thickness (mm) of the steel material at a position inside from the edge face covered by the coating layer by 10 mm or more,
te is an average sheet thickness (mm) of the steel material at a position of 1 to 10 mm from the edge face covered by the coating layer,
We is an average thickness (μm) per surface of the coating layer at a position of 1 to 10 mm from the edge face covered by the coating layer,
Wc is an average thickness (μm) per surface of the coating layer at a position inside from the edge face covered by the coating layer by 10 mm or more, and
Wt is an average thickness (μm) of the coating layer at the edge face covered by the coating layer.

(2) The guard rail beam according to the above (1), wherein the coating layer is a Zn-Al-Mg-based coating.
(3) The guard rail beam according to the above (1) or (2), wherein the coating layer has a chemical composition comprising, by mass%,

Al: more than 15.0 to 30.0%,
Mg: more than 5.0 to 15.0%,
Sn: 0 to 0.70%,
Ca: 0 to 0.60%,
Si: 0 to 0.75%,
Ti: 0 to 0.25%,
Ni: 0 to 1.00%,
Co: 0 to 0.25%,
Fe: 0 to 5.0%,
B: 0 to 0.50%, and
balance: Zn and impurities.

(4) The guard rail beam according to any one of the above (1) to (3), arranged so that the edge face covered by the coating layer faces upward relative to a ground surface.
(5) The guard rail beam according to any one of the above (1) to (4), wherein a coating coverage rate up to a position of 10 mm from the edge face covered by the coating layer is 90 area% or more.
(6) The guard rail beam according to any one of the above (1) to (5), wherein at least one edge face other than the edge face covered by the coating layer is a cut edge face, the cut edge face has a slanted surface slanted from a first surface toward a second surface of the steel material relative to a sheet thickness direction and a fractured surface or has a slanted surface slanted from a first surface toward a second surface of the steel material relative to a sheet thickness direction, a sheared surface, and a fractured surface,

a length of the fractured surface in the sheet thickness direction is 40% or less of a sheet thickness of the steel material, and
coating coverage rates at the slanted surface and the sheared surface are a total of 50 area% or more.

(7) The guard rail beam according to any one of the above (1) to (5), wherein at least one edge face other than the edge face covered by the coating layer is a cut edge face, the cut edge face has

a first slanted surface slanted from a first surface toward a center part of the steel material relative to a sheet thickness direction,
a second slanted surface slanted from a second surface toward a center part of the steel material relative to a sheet thickness direction, and
a fractured surface formed between the first slanted surface and the second slanted surface,
a length of the fractured surface in the sheet thickness direction is 40% or less of a sheet thickness of the steel material, and
coating coverage rates at the first slanted surface and the second slanted surface are a total of 50 area% or more.

[ADVANTAGEOUS EFFECTS OF INVENTION]

According to the present invention, it is possible to provide a guard rail beam improved in corrosion resistance.

BRIEF DESCRIPTION OF DRAWINGS

FIG. 1 is a schematic view showing a structure of an end part of a coated steel material forming a guard rail beam according to embodiments of the present invention.
FIG. 2 is a schematic view showing a state cut by a conventional cutting device.
FIG. 3 is a schematic view showing a cut edge face of a coated steel material after cutting by a conventional cutting device.
FIG. 4 is a schematic view showing a cut state when obtaining a cut edge face according to an additional preferable Embodiment 1.
FIG. 5 is a schematic view showing a cut state when obtaining a cut edge face according to an additional preferable Embodiment 1.
FIG. 6 is a schematic view showing a cut edge face according to an additional preferable Embodiment 1.
FIG. 7 is a schematic view showing a cut edge face according to an additional preferable Embodiment 2.
FIG. 8 is a schematic view showing a state before cutting a coated steel material for obtaining a cut edge face according to an additional preferable Embodiment 2.
FIG. 9 is a schematic view showing a state after cutting a coated steel material by the cutting device shown in FIG. 8.

DESCRIPTION OF EMBODIMENTS

<Guard Rail Beam>

The guard rail beam according to the embodiments of the present invention is comprised of a coated steel material comprising a steel material and coating layer formed on both surfaces of the steel material and made of a Zn-based coating, wherein
at least one edge face of the steel material is covered by the coating layer and satisfies following Formulas 1 to 3:

$$0.60 \times tc \leq te < tc \quad \cdots \text{ Formula 1}$$

$$We \geq Wc \quad \cdots \text{ Formula 2}$$

$$Wt \geq Wc \quad \cdots \text{ Formula 3}$$

where

tc is an average sheet thickness (mm) of the steel material at a position inside from the edge face covered by the coating layer by 10 mm or more,
te is an average sheet thickness (mm) of the steel material at a position of 1 to 10 mm from the edge face covered by the coating layer,
We is an average thickness (μm) per surface of the coating layer at a position of 1 to 10 mm from the edge face covered by the coating layer,
Wc is an average thickness (μm) per surface of the coating layer at a position inside from the edge face covered by the coating layer by 10 mm or more, and
Wt is an average thickness (μm) of the coating layer at the edge face covered by the coating layer.

In a guard rail beam comprised of a steel material comprising a coating layer, sometimes an end part of the steel material is not sufficiently covered by the coating layer. In such a case, there is the problem that compared with the front and back surfaces of the steel material, corrosion occurs and progresses more easily at the end part. If corrosion at the end part causes formation of red rust and it progresses from the end part, not only does this lead to a drop in service life, but also it causes a large drop in quality in appearance, and therefore this is not preferable. Therefore, the inventors engaged in studies focusing on the structure of an end part of a guard rail beam where corrosion occurs and progresses relatively easily. Below, this will be explained in more detail while referring to the drawings.

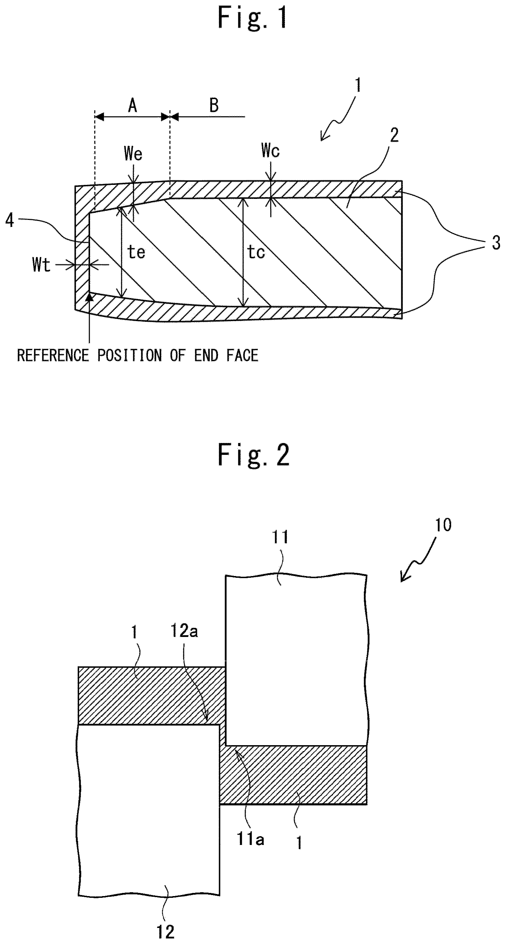

FIG. 1 is a schematic view showing a structure of an end part of a coated steel material forming a guard rail beam according to embodiments of the present invention. Referring to FIG. 1, the coated steel material 1 forming the guard rail beam according to embodiments of the present invention comprises a steel material 2 and a coating layer 3 formed on both surfaces of the steel material 2, i.e., the front and back surfaces, and made of a Zn-based coating. The edge face 4 of the steel material 2 is covered by the coating layer 3. First, the inventors discovered that by making a predetermined range at the end part of the steel material 2 thinner, more specifically, when designating the average sheet thickness (mm) of the steel material 2 at a position of 1 to 10 mm from the edge face 4 of the steel material 2 covered by the coating layer 3, i.e., a position vertical to the sheet thickness direction and inside from the edge face 4 by 1 to 10 mm (A region in FIG. 1) as "te" and designating the average sheet thickness (mm) of the steel material 2 at a position inside from the edge face 4 of the steel material 2 covered by the coating layer 3 by 10 mm or more (B region in FIG. 1) as "tc", by controlling these average sheet thicknesses to satisfy the following Formula 1, even when the coating layer 3 of the end part is consumed and part of the steel material 2 is exposed, due to the sheet thickness of the exposed part being thin, it is possible to make the area of the cathodic reaction region smaller, and therefore it is possible to keep to a minimum extent the sacrificial corrosion protect effect of the coating layer 3 comprised of the Zn-based coating and thereby possible to improve the corrosion resistance of the coated steel material 1 and the guard rail beam comprised of the same and in turn possible to achieve longer service life:

$$0.60\times tc \leq te < tc \quad \cdots \quad \text{Formula 1}$$

In addition, the inventors discovered that in relation to making the average sheet thickness te (μm) of the A region of the steel material 2 smaller, by making the average thickness We (μm) per surface of the coating layer 3 of the A region the same as or relatively thicker than the average thickness We (μm) per surface of the coating layer 3 of the B region, more specifically by controlling these average thicknesses to satisfy the following Formula 2, and further by making the average thickness Wt (μm) of the coating layer 3 at the edge face 4 of the steel material 2 relatively greater, more specifically controlling it to satisfy the following Formula 3, it is possible to more remarkably improve the corrosion resistance and service life of the coated steel material 1 and the guard rail beam comprised of the coated steel material 1.

$$We \geq Wc \quad \cdots \quad \text{Formula 2}$$

$$Wt \geq Wc \quad \cdots \quad \text{Formula 3}$$

The fact that, without regard as to pre-coating treatment or post-coating treatment, by controlling an end part of a coated steel material to a structure such as shown in FIG. 1 and further applying this to a guard rail beam, it is possible to remarkably improve the corrosion resistance of the guard rail beam and in turn the service life, has not been known in the past and first became clarified by the present inventors. In fact, in conventional pre-coating treatment, for example, as taught in Japanese Unexamined Patent Publication No. 6-122953 as well, edge overcoating where the amount of coating deposition becomes greater at the end part of the steel material becomes a cause for poor flatness and other poor quality, and therefore preventing its occurrence is generally sought. As opposed to this, in the guard rail beam according to embodiments of the present invention, the sheet thickness of the end part of the steel material is made thinner to thereby make the coating layer of the end part relatively thicker, and therefore it is possible to achieve higher corrosion resistance and longer service life without causing problems of poor flatness and defects in quality due to edge overcoating like in conventional pre-coating treatment.

Below, the guard rail beam according to embodiments of the present invention is explained in more detail, but these explanations are intended to simply illustrate preferable embodiments of the present invention and are not intended to limit the present invention to such specific embodiments.

[Formula 1: $0.60\times tc \leq te < tc$]

In the guard rail beam according to embodiments of the present invention, it is necessary to control the average sheet thickness te (mm) of the steel material at a position of 1 to 10 mm from the edge face of the steel material covered by the coating layer and the average sheet thickness tc (mm) of the steel material at a position inside from the edge face of the steel material covered by the coating layer by 10 mm or more so that these average sheet thicknesses satisfy the following Formula 1:

$$0.60\times tc \leq te < tc \quad \cdots \quad \text{Formula 1}$$

Due to this, for example, even if corrosion or peeling, etc., causes the coating layer at an end part of the steel material to be lost and part of the steel material to be exposed, as explained above, due to the sheet thickness of the exposed part being thin, it is possible to make the area of the cathodic reaction region smaller, and therefore it is possible to keep to a minimum extent the sacrificial corrosion protect effect of the coating layer made of the Zn-based coating. For this reason, it is possible to maintain the sacrificial corrosion protect effect of the coating layer over a long period of time, and therefore is possible to achieve improvement of the corrosion resistance and longer service life of the coated steel material and a guide rail beam configured by the same. Further, by making te thinner, it is possible to make the average thickness We of the coating layer at the same region relatively thicker, and therefore it is possible to further improve the corrosion resistance and the service life. From this viewpoint, the smaller the te, the more preferable. For example, it may be 0.98 time or less tc ($\leq 0.98\times tc$), 0.95 time or less ($\leq 0.95\times tc$), 0.93 time or less ($\leq 0.93\times tc$), 0.90 time or less ($\leq 0.90\times tc$), or 0.88 time or less ($\leq 0.88\times tc$). On the other hand, if making te too thin, the strength of the end part falls and sometimes deformation occurs when transporting the guard rail beam or at installation work or other handling. Therefore, te is 0.60 time or more tc ($0.60\times tc \leq$). For example, it may be 0.65 time or more ($0.65\times tc \leq$), 0.70 time or more ($0.70\times tc \leq$), 0.75 time or more ($0.75\times tc \leq$), or 0.80 time or more ($0.80\times tc \leq$).

The specific value of tc may be any suitable value generally used in guard rail beams. It is not particularly limited, but, for example, it may be 2.0 mm or more, 2.5 mm or more, 3.0 mm or more, or 3.5 mm or more and/or may be 6.0 mm or less, 5.5 mm or less, 5.0 mm or less, or 4.5 mm or less.

In the present invention, the reference position of an edge face of the steel material in the expressions "a position of 1 to 10 mm from the edge face" and "a position inside from the edge face by 10 mm or more" are identified from cross-sectional photos of the end part of the coated steel material. More specifically, when drawing a straight line parallel to the sheet thickness direction in a cross-sectional photo of the end part of a coated steel material, the point at the outermost side of the end part of the coated steel material contacting the straight line is determined as the reference position of the edge face of the steel material. Therefore, for example, if not the straight edge face parallel to the sheet thickness direction such as shown in FIG. 1, but an uneven shaped edge face or a slanted edge face, the point at the outermost side contacting a line parallel to the sheet thickness direction in the cross sectional photo is determined as the reference position of the edge face of the steel material. Further, te means the arithmetic average of the sheet thicknesses obtained by measuring the sheet thickness of the steel material at a position of 1 to 10 mm from the edge face at five points at 2 mm intervals in the cross sectional photo of the end part of the coated steel material. Similarly, tc means the arithmetic average of the sheet thicknesses obtained by measuring the sheet thickness of the steel material at a position inside from the edge face by 10 mm or more at three points or more at 50 mm intervals. One point among the measurement points is one measuring the sheet thickness around the center part of the steel material.

[Formula 2: $We \geq Wc$]

[Formula 3: $Wt \geq Wc$]

In the guard rail beam according to embodiments of the present invention, the average thickness We ($\mu$m) per surface of the coating layer at a position of 1 to 10 mm from the edge face of the steel material covered by the coating layer and the average thickness Wc ($\mu$m) per surface of the coating layer at a position inside from the edge face of the steel material covered by the coating layer by 10 mm or more have to be controlled so that these average thicknesses satisfy the following Formula 2. Similarly, the average thicknesses Wt ($\mu$m) and Wc ($\mu$m) of the coating layer at the edge face of the steel material covered by the coating layer have to be controlled so that these average thicknesses satisfy the following Formula 3.

$$We \geq Wc \quad \cdots \quad \text{Formula 2}$$

$$Wt \geq Wc \quad \cdots \quad \text{Formula 3}$$

By making We and Wt corresponding to the thickness of the coating layer of the end part of the steel material where corrosion relatively easily occurs and progresses equal to or thicker than the Wc corresponding to the thickness of the coating layer of the front and back surfaces of the steel material, it is possible to reliably improve the corrosion resistance and service life of the coated steel material and guard rail beam comprised of the same. From the viewpoint of improvement of the corrosion resistance, the greater the We and Wt, the more preferable. More specifically, relating to Formulas 2 and 3, We and Wt, for example, may also respectively independently be more than 1.00 time Wc (>Wc), 1.10 times or more (≥1.10×Wc), 1.20 times or more (≥1.20×Wc), 1.30 times or more (≥1.30×Wc), 1.40 times or more (≥1.40×Wc), or 1.50 times or more (≥1.50×Wc). On the other hand, even if making We and Wt too thick, the effect of improvement of the corrosion resistance becomes saturated. In particular, if We becomes too thick, sometimes poor flatness and other poor quality of the steel material occur. Therefore, We and Wt are not particularly limited, but respectively independently are 2.50 times or less Wc (≤2.50×Wc) is preferable. For example, they may also be 2.30 times or less Wc (≤2.30×Wc), 2.00 times or less (≤2.00×Wc), or 1.80 times or less (≤1.80×Wc).

The specific value of Wc may be any suitable value. It is not particularly limited, but, for example, it may be 3 μm or more or 5 μm or more. From the viewpoint of improvement of the corrosion resistance, Wc is preferably 10 μm or more, more preferably 15 μm or more, most preferably 20 μm or more. The upper limit is not particularly prescribed, but Wc may also be, for example, 80 μm or less, 60 μm or less, 50 μm or less, 40 μm or less, or 30 μm or less.

Regarding Formula 2, in the coating layer formed on both surfaces of the steel material, it is sufficient that the relationship of We≥Wc be satisfied in at least one surface. The reason is that if Formula 2 is satisfied for even one of the surfaces, compared to if Formula 2 is not satisfied at both surfaces, it is possible to improve the corrosion resistance of the coated steel material and the guard rail beam comprised of the same. From the viewpoint of better improving the corrosion resistance, Formula 2 is preferably satisfied in the coating layer formed on both surfaces of the steel material. Further, regarding Formula 3 as well, it is sufficient that the relationship of Wt≥Wc be satisfied in at least one surface in the coating layer formed on both surfaces of the steel material, i.e., it is sufficient that the average thickness Wt of the coating layer at the edge face satisfy the relationship of Wt≥Wc with respect to the Wc of at least one surface. The reason is that if Formula 3 is satisfied for even one of the surfaces, compared to if Formula 3 is not satisfied at both surfaces, it is possible to improve the corrosion resistance of the coated steel material and the guard rail beam comprised of the same. From the viewpoint of improving the corrosion resistance more, it is preferable to satisfy the Formula 3 in the coating layer formed on both surfaces of the steel material. Further, it is more preferable to satisfy both Formula 2 and Formula 3 in the coating layer formed on both surfaces of the steel material.

We means the arithmetic average of the values obtained by measuring the thickness per surface of the coating layer at a position of 1 to 10 mm from the edge face at 2 mm intervals at five points in a cross-sectional photograph of the end part of the coated steel material. Provided, however, that in the five measurement points, for example, if a measurement point where the steel base is partially exposed and the measurement value of the coating layer thickness becomes 0 (zero) is included, We means the arithmetic average of the remaining measurement values other than the measurement value. Similarly, Wc means the arithmetic average obtained by measuring the thickness per surface of the coating layer at a position inside from the edge face by 10 mm or more at 50 mm or more intervals at three points or more. One point among the measurement points is one when measuring the thickness per surface of the coating layer around the center part of the steel material. Further, Wt means the arithmetic average of the measurement values of three or more points other than the smallest measurement value among the measurement values of the four or more points obtained when measuring the thickness of the coating layer at the positions of any different four or more points on the edge face. However, the measurement value of one point among the measurement values of the four or more points is the measurement value of the part with the thickest thickness of the coating layer on the edge face. Further, the four or more measurement points do not include measurement points where measurement values of the coating layer thickness become 0 (zero). In relation to this, the coating of the edge face is shaved off, etc., due to handling resulting in the coating becoming locally thinner and sometimes the steel base becoming exposed. However, if the steel base is only partially exposed and the values of We and Wt measured and calculated by the above methods respectively satisfy Formula 2 and Formula 3, the effect of the present invention is obtained due to the sacrificial corrosion protect effect of the surrounding coating and the effect of coverage by the corrosion products of the coating. The partial exposure of the steel base within 10 mm from the reference position of the edge face defined above is preferably one with a total of the exposed lengths including the front and back surfaces when examining the cross-section becoming 200 μm or less.

[Coating Layer]

The coated steel material according to embodiments of the present invention comprises a steel material provided on its both surfaces with a coating layer made of a Zn-based coating. In the present invention, a "Zn-based coating" means a coating mainly comprised of Zn. If Zn is the main constituent, the Zn content in the coating layer is not particularly limited. For example, the Zn content in the coating layer may also be 30.0 mass% or more or 40.0 mass% or more. By making the coating layer from a Zn-based coating, it is possible to secure a high corrosion resistance by the sacrificial corrosion protect effect of Zn. For example, the coating layer may be a hot-dip galvanized layer or hot-dip galvannealed layer. From the viewpoint of better improving the corrosion resistance, the coating layer is preferably a Zn-Al-Mg-based coating. While not particularly limited, the Zn content in the coating layer is preferably 50.0 mass% or more. For example, it may also be 55.0 mass% or more, 60.0 mass% or more, 65.0 mass% or more, or 70.0 mass% or more. The upper limit is not particularly prescribed, but the Zn content in the coating layer may also be 100 mass%. For example, it may also be 95.0 mass% or less or 90.0 mass% or less.

[Preferable Chemical Composition of Coating Layer]

The present invention, as explained above, has as its object the provision of a guard rail beam with an improved corrosion resistance. The above object is achieved by forming a guard rail beam by a coated steel material comprising a coating layer formed on both surfaces of the steel material and made of a Zn-based coating and, furthermore, by covering at least one edge face of the steel material by the coating layer and making the structure of the end part of the coated steel material satisfy Formulas 1 to 3. Therefore, the coating layer need only be a Zn-based one. It is clear that the specific chemical composition of the coating layer as a whole is not a technical feature essential in achieving the object of the present invention. Below, the preferable chemical composition of the coating layer applied in the coated steel material according to embodiments of the present invention will be explained in detail, but these explanations are intended to simply illustrate the preferred chemical composition of the coating layer for further improving the corrosion resistance and are not intended to limit the present invention to one using a coating layer having such a specific chemical composition. Further, in the following explanation, the "%" relating to the contents of the constituents, unless particularly indicated otherwise, means "mass%".

[Al: More Than 15.0 to 30.0%]

Al is an element effective for improving the corrosion resistance and workability of the coating layer. To sufficiently obtain these effects, the Al content is preferably more than 15.0%. The Al content may also be 17.0% or more. On the other hand, if excessively containing Al, sometimes the effect becomes saturated or conversely the workability is lowered. Therefore, the Al content is preferably 30.0% or less. The Al content may also be 28.0% or less, 26.0% or less, 24.0% or less, 22.0% or less, or 20.0% or less.

[Mg: More Than 5.0 to 15.0%]

Mg is an element effective for improving the corrosion resistance of the coating layer. To sufficiently obtain such an effect, the Mg content is preferably more than 5.0%. The Mg content may also be 5.5% or more. On the other hand, if excessively containing Mg, sometimes brittle $MgZn_2$ phases are coarsely and excessively formed and the workability is lowered. Therefore, the Mg content is preferably 15.0% or less. The Mg content may also be 13.0% or less, 10.0% or less, or 8.0% or less.

The basic chemical composition of the coating layer is as explained above. Further, the coating layer may also contain, in accordance with need, one or more elements selected from the group consisting of Sn: 0 to 0.70%, Ca: 0 to 0.60%, Si: 0 to 0.75%, Ti: 0 to 0.25%, Ni: 0 to 1.00%, Co: 0 to 0.25%, Fe: 0 to 5.0%, and B: 0 to 0.50%. Below, these optional elements will be explained in detail.

[Sn: 0 to 0.70%]

Sn is an element effective for improving the corrosion resistance and workability of the coating layer. The Sn content may also be 0%, but to obtain these effects, the Sn content is preferably 0.01% or more. The Sn content may also be 0.05% or more. On the other hand, if excessively containing Sn, sometimes coarse brittle $Mg_2Sn$ phases, etc., are formed and the workability is lowered. Therefore, the Sn content is preferably 0.70% or less. The Sn content may also be 0.60% or less, 0.40% or less, or 0.25% or less.

[Ca: 0 to 0.60%]

Ca is an element effective for suppressing the formation of top dross formed on a coating bath at the time of production of the coating layer and also has the effect of improving the workability of the coating layer. The Ca content may also be 0%, but to obtain these effects, the Ca content is preferably 0.01% or more. The Ca content may also be 0.05% or more. On the other hand, if excessively containing Ca, sometimes brittle Ca-Zn phases are formed and lower the workability. Therefore, the Ca content is preferably 0.60% or less. The Ca content may also be 0.50% or less, 0.40% or less, or 0.30% or less.

[Si: 0 to 0.75%]

Si is an element effective for improving the adhesion of the coating layer to the steel material. The Si content may also be 0%, but to obtain such an effect, the Si content is preferably 0.01% or more. The Si content may also be 0.05% or more or 0.10% or more. On the other hand, if excessively containing Si, sometimes coarse $Mg_2Si$ phases are formed and lower the workability. Therefore, the Si content is preferably 0.75% or less. The Si content may also be 0.60% or less, 0.40% or less, or 0.20% or less.

[Ti: 0 to 0.25%]

Ti is an element effective for improving the corrosion resistance of the coating layer. The Ti content may also be 0%, but to obtain such an effect, the Ti content is preferably 0.01% or more. On the other hand, if excessively containing Ti, the effect becomes saturated. Therefore, including Ti in the coating layer more than necessary is liable to invite a rise in the production costs. Therefore, the Ti content is preferably 0.25% or less. The Ti content may also be 0.20% or less, 0.15% or less, or 0.12% or less.

[Ni: 0 to 1.00%]

Ni is an element effective for improving the corrosion resistance of the coating layer. The Ni content may also be 0%, but to obtain such an effect, the Ni content is preferably 0.01% or more. The Ni content may also be 0.10% or more, 0.15% or more, or 0.20% or more. On the other hand, if excessively containing Ni, the effect becomes saturated. Therefore, including Ni in the coating layer more than necessary is liable to invite a rise in the production costs. Therefore, the Ni content is preferably 1.00% or less. The Ni content may also be 0.80% or less, 0.60% or less, or 0.40% or less.

[Co: 0 to 0.25%]

Co is an element effective for improving the corrosion resistance of the coating layer. The Co content may also be 0%, but to obtain such an effect, the Co content is preferably 0.01% or more. The Co content may also be 0.02% or more. On the other hand, if excessively containing Co, the effect becomes saturated. Therefore, including Co in the coating layer more than necessary is liable to invite a rise in the production costs. Therefore, the Co content is preferably 0.25% or less. The Co content may also be 0.20% or less, 0.15% or less, or 0.10% or less.

[Fe: 0 to 5.0%]

Fe is able to be included in the coating layer by intentional addition in the coating bath to keep Fe from dissolving out from the coating pot or by dissolving out in the coating bath from the steel material, etc. The Fe content may also be 0%, but if Fe is included in the coating layer, the Fe content can be 0.1% or more, 0.3% or more, or 0.5% or more. Similarly, if Fe is included in the coating layer, the Fe content is generally 5.0% or less and can be 3.0% or 1.0% or less.

[B: 0 to 0.50%]

B is an element effective for improving the corrosion resistance of the coating layer. The B content may be 0%, but to obtain such an effect, the B content is preferably 0.001% or more. The B content may also be 0.01% or more or 0.02% or more. On the other hand, if excessively containing B, the effect becomes saturated and therefore inclusion of B more than necessary in the coating layer is liable to invite a rise in the production costs. Therefore, the B content is preferably 0.50% or less. The B content may also be 0.30% or less, 0.20% or less, or 0.10% or less.

[Balance: Zn and Impurities]

In the coating layer, the balance besides the above-mentioned elements is comprised of Zn and impurities. The "impurities" in the coating layer are constituents, etc., entering due to various factors in the production process such as the raw materials when industrially producing the coating layer.

The chemical composition of the coating layer is determined by dissolving the coating layer in an acid solution to which an inhibitor suppressing corrosion of the steel material is added and measuring the obtained solution by ICP (high frequency inductively coupled plasma) emission spectroscopy.

[Steel Material]

The steel material applied in the guard rail beam according to embodiments of the present invention may be any suitable material known to persons skilled in the art generally used in a guard rail beam. While not particularly limited to this, for example, one having a tensile strength of 400 MPa or more is preferable. The steel material may be one having a tensile strength of 480 MPa or more, 590 MPa or more, or 780 MPa or more. By using such a high strength material, it is possible to make the sheet thickness of the steel material thinner. The upper limit is not particularly prescribed, but, for example, the tensile strength of the steel material may also be 980 MPa or less. The tensile strength of the steel material is measured by preparing a No. 5 test piece and conducting a tensile test based on JIS Z 2241: 2011. The chemical composition and microstructure of the steel material are not particularly limited and can be suitably determined in accordance with the desired tensile strength, etc.

[Orientation of Edge Face Covered by Coating Layer]

According to a preferable embodiment of the present invention, the edge face of the steel material covered by the coating layer is arranged so as to face upward with respect to the ground surface. "Facing upward with respect to the ground surface" does not necessarily mean facing right upward with respect to the ground surface and includes a state where the axis vertical to the edge face is slanted by an angle of 80° or less with respect to vertical upward. The axis vertical to the edge face may also be slanted by an angle of 70° or less, 60° or less, or 45° or less with respect to vertical upward. Further, "facing upward with respect to the ground surface" does not necessarily mean the position of the end part of the steel material being at the top side and means whether the axis vertical to the edge face faces upward with respect to the ground surface regardless of the position of the end parts of the steel material. Among the edge faces at the guard rail beam, the edge face facing upward with respect to the ground surface generally becomes the portion where corrosion easily occurs and progresses. For this reason, by applying the end structure of the guard rail beam according to embodiments of the present invention to such a portion, it is possible to more remarkably improve the corrosion resistance of the guard rail beam.

If explaining in more detail the advantage of arranging the edge face of the steel material covered by the coating layer to face upward with respect to the ground surface, first, as the corrosion prevention action by the Zn-based coating, in addition to the high corrosion resistance of the Zn-based coating itself, the so-called sacrificial corrosion protect effect by the Zn-based coating and further the corrosion prevention action of keeping down the speed of corrosion by the corrosion products of the Zn-based coating acting as a protective film of the steel material may be considered. Here, in a guard rail beam using a Zn-based coating, if red rust occurs at the exposed part of the steel material at the edge face facing upward with respect to the ground surface among the edge faces at the guard rail beam (below, also simply referred to as the "upward edge face"), due to the sacrificial corrosion protect effect by the Z-based coating in the vicinity, the coating near the upper edge face is easily corroded. In relation to this, corrosion products of the Zn-based coating are formed, but sometimes the corrosion products formed cannot sufficiently cover the vicinity of the upper edge face due to gravity. For this reason, for example, compared with the case of other edge faces sufficiently covered by the corrosion products, due to the sacrificial corrosion protect effect by the Zn-based coating continuing to act over a long period, sometimes corrosion of the Zn-based coating is promoted. Even if the upper edge face is covered by corrosion products of the Zn-based coating, the corrosion products similarly easily flow out to the lower side due to gravity and sometimes it is not possible to suitably maintain the state covered by the corrosion products. Therefore, while the lower part of the guard rail beam is covered by corrosion products and the corrosion speed is suppressed, at the upper part, the corrosion products of the Zn-based coating easily flow out, and therefore compared with the lower part, progression and expansion of corrosion tend to be promoted. That is, at the exposed part of the steel material at the upper edge face of the guard rail beam, the Zn-based coating in its vicinity corrodes, but if the exposed part of the steel material is not sufficiently covered by a protective film of such corrosion products, corrosion at the exposed part of the steel material further proceeds. To prevent this, the sacrificial corrosion protect due to the Zn-based coating continues acting. As a result, the Zn-based coating gradually disappears from the upper edge face part of the guard rail beam, and therefore the exposed part of the steel material expands. To prevent this, a need arises for sacrificial corrosion protect, but along with the consumption of the Zn-based coating, sacrificial corrosion protect no long acts over long distances and red rust progresses and expands.

As opposed to this, in the guard rail beam according to embodiments of the present invention, first, the edge face is sufficiently covered by a relatively thick coating layer, and therefore the corrosion resistance with respect to the initial formation of red rust is extremely high. Second, as explained previously, the end part of the steel material is thin in sheet thickness. Due to this, even if the coating layer at the end part of the steel material is consumed and part of the steel material is exposed, it is possible to reduce the area of the cathodic reaction region, and therefore it is possible to keep to a minimum extent the sacrificial corrosion protect effect of the coating layer made of the Zn-based coating. Therefore, in the guard rail beam according to embodiments of the present invention, by arranging the beam so that the edge face covered by the coating layer shown in FIG. 1 faces upward with respect to the ground surface, compared to when not using such an end structure, it is possible to sufficiently suppress or prevent the formation of red rust at the upper edge face of the guard rail beam and expansion of red rust from the upper edge face, and therefore it is possible to more remarkably improve the corrosion resistance and service life of the guard rail beam.

[Coating Coverage Rate Up to Position of 10 mm From Edge Face Covered by Coating Layer: 90 Area% or More]

In the guard rail beam according to embodiments of the present invention, the coating coverage rate up to a position of 10 mm from the edge face covered by the coating layer, more specifically a position vertical to the sheet thickness direction and inside from the edge face covered by the coating layer by 10 mm is preferably 90 area% or more. By making the coating coverage rate 90 area% or more, it is possible to more reliably suppress or prevent the occurrence of red rust at the edge face of the guard rail beam and the expansion of red rust from the edge face. The coating coverage rate may, for example, be 92 area% or more, 95 area% or more, or 97 area% or more. The upper limit is not particularly prescribed, but the coating coverage rate may, for example, be 100 area% and may be 99 area% or less.

The coating coverage rate up to a position of 10 mm from the edge face covered by the coating layer is determined in the following way. First, the end part of the coated steel material covered by the coating layer is photographed from the front surface, back surface, and edge face in direction. The image data is taken into the computer. Next, at the photos from the front surface and back surface directions, the overall area and the coating coverage area are calculated by image analysis based on the difference in gloss of the coating layer and steel material for the region up to a position of 10 mm from the edge face identified by the cross-sectional photo of the end part of the coated steel material explained previously from the part at the outermost side of the coating layer. Next, in the photo from the edge face direction, similarly the entire area and the coating coverage areas are calculated. Finally, the total of the coating covering areas of the front surface, back surface, and edge face is divided by the total of the area as a whole to determine the coating coverage rate up to a position of 10 mm from the edge face covered by the coating layer.

[Ridge Length of Edge Face Covered by Coating Layer: 1.3 Times or More tc]

According to a preferable embodiment of the present invention, the ridge length of the edge face covered by the coating layer is 1.3 times or more tc. More specifically, the edge face covered by the coating layer has a relief shape whereby the ridge length of the edge face becomes 1.3 times or more tc. By the ridge length of the edge face covered by the coating layer being 1.3 times or more tc, the shape of the edge face can be made more of a relief shape. For this reason, it is possible to enhance the adhesion between the coating layer and steel material at the end part due to the so-called anchor effect. In this case, it is possible to remarkably suppress or prevent the occurrence and progression of corrosion due to peeling of the coating, etc. From the viewpoint of raising the adhesion of the coating layer, the longer the ridge length of the edge face covered by the coating layer, the more preferable. For example, it may be 1.4 times or more, 1.5 times or more, 1.7 times or more, or 2.0 times or more. The upper limit is not particularly prescribed, but the ridge length of the edge face covered by the coating layer may also be, for example, 2.5 times or less or 2.2 times or less.

The ridge length of the edge face covered by the coating layer is found by analyzing an image of the edge face using image analysis software in a cross-sectional photograph of the end part of the coated steel material explained in relation to the definition of tc. Next, the ratio of the ridge length of the edge face to tc is determined from the obtained ridge length of the edge face and the previously found value of tc.

[Shape of Guard Rail Beam]

The guard rail beam according to embodiments of the present invention can be made any known shape complying with national regulations, etc. For example, looking at the criteria for installation of protective fencing in Japan, the guard rail beam according to embodiments of the present invention can be used for guard rail beams of any shapes of type SS, type SA, type SB, type SC, type A, type B, and type C.

<Method of Production of Guard Rail Beam>

The guard rail beam according to embodiments of the present invention can be produced by any suitable method known to persons skilled in the art. In the structure of a guard rail beam, in particular the parts other than the end structure satisfying above Formulas 1 to 3 can be easily produced by conventionally known methods using, for example, SS400 or other SS material (rolled steel material for general structural use) having a tensile strength of 400 MPa or more. For this reason, below, relating to the production of the end structure part, the case of using coated steel sheet treated to pre-coat it will be explained in detail. However, the following explanation is intended to illustrate the method for producing the guard rail beam according to embodiments of the present invention and is not intended to limit the guard rail beam to one produced by the method of production such as explained below.

In the pre-coating treatment, the end part cut by a slitter, etc., is not covered by the coating layer, and therefore if using such a cut edge face for the end structure of the guard rail beam according to embodiments of the present invention (below, also simply referred to as the "end structure of the guard rail beam"), an additional coating step become necessary, and therefore this is not suitable. Therefore, it is preferable to use the end part in the width direction not cut in the pre-coated steel sheet for the end structure of the guard rail beam. Such a configuration has not been proposed in the prior art. In relation to this, for example, the width of the coated steel sheet before being worked into a wavy shape guard rail beam is generally 400 to 500 mm or so. For this reason, if producing a coated steel sheet having the same extent of sheet width, it is possible to use the two edge faces in the width direction for the end structures of a guard rail beam without cutting. In this case, among the edge faces of the steel material in the guard rail beam finally obtained, two edge faces are covered by coating layer. However, production of coated steel sheet having such a relatively short sheet width lowers the production efficiency and as a result invites a rise in production costs. Therefore, it is preferable to produce a coated steel sheet having a sheet width of about 2 times the width of the guard rail beam covered and cut the coated steel sheet by a slitter, etc., to divide it into two parts in the width direction. In this case, in the two divided coated steel materials, the end parts in the width direction which are not cut are covered by coating layer, and therefore it is possible to use the end parts of the coated steel sheets in the width direction for the end structures of guard rail beams.

The end structure of a guard rail beam satisfying Formula 1: $0.60\times tc \leq te < tc$ can, for example, be produced by rolling in the rolling step using rolling rolls slanted so that the sheet thicknesses of the end parts in the width direction of the steel material become thinner. As another method of working the edge faces, for example, when trimming end parts in the width direction of the steel sheet before the coating step, it is possible to impart a step of compressing or forging the edge face or possible to grind the end part in the width direction of the steel sheet to make it thinner similarly before the coating step to thereby produce an end structure satisfying the above Formula 1.

The end structure of the guard rail beam satisfying Formula 2: $We \geq Wc$ and Formula 3: $Wt \geq Wc$ can, for example, be produced by suitably controlling the conditions of gas wiping in the coating step after the rolling step. Explained in more detail, in the coating step, the amount of coating deposition is controlled generally by gas wiping. Gas wiping is the technique of blowing nitrogen or air or other gas on the front and back surfaces of the coated steel sheet pulled up from the hot-dip coating bath. The amount of coating deposition is generally controlled by adjusting the gas pressure of the gas wiping, the interval of nozzles for blowing gas, the blowing positions, etc. However, near the edge face of the coated steel sheet, the gases interfere with each other due to gas being blown by gas wiping from both of the front surface and back surface of the coated steel sheet. Due to the interference of the blown gas, the gas blowing pressure falls, therefore by suitably controlling the fall in blowing pressure, it is possible to make the amount of coating deposition at the end part of the coated steel sheet greater than at the center part, i.e., it is possible to make the coating deposit thickly so as to satisfy the above Formulas 2 and 3. At the coating step, the conditions other than the gas wiping are not particularly limited. It is possible to use a hot-dip coating bath suitable for a Zn-based coating, for example, a hot-dip coating bath adjusted in composition so that the chemical composition of the coating layer becomes within the preferable range of chemical composition of the coating layer explained above, to perform coating under suitable conditions known to persons skilled in the art in the hot-dip coating process.

As still another method for producing the end part structure of a guard rail beam satisfying the above-mentioned Formulas 1 to 3, the following method may be mentioned. Specifically, first, the steel sheet itself before the coating step is produced in a flat shape, then in the following coating step, the gas wiping conditions (gas pressure, nozzle intervals, blowing position, etc.) are suitably adjusted to produce a coated steel sheet with a relatively thick coating thickness of the end part. Next, the obtained coated steel sheet can be skin pass rolled, etc., to suitably reduce the end part of the coated steel sheet and thereby produce an end structure where the sheet thickness of the width direction end part of the steel sheet is kept thin while the coating thickness of the width direction end part is made thick, i.e., an end structure satisfying the above Formulas 1 to 3.

Next, the obtained coated steel sheet is worked to a desired shape corresponding to the application, such as regional roads and national roads, trunk roads and highways with large amounts of traffic, using conventional known suitable methods whereby the guard rail beam according to embodiments of the present invention is produced. From the viewpoint of beautiful appearance and further long-term durability, the guard rail beam may also be painted by powder painting or other post painting.

The guard rail beam produced by the above-mentioned method of production, by satisfying the above-mentioned Formula 1, can reduce the area of the cathodic reaction region since the sheet thickness of the exposed part is thin even if the coating layer of the end part of the steel material is consumed for example by corrosion, peeling, etc., and part of the steel material is exposed and can keep the sacrificial corrosion protect effect of the coating layer made of a Zn-based coating to the minimum and maintain the sacrificial corrosion protect effect over a long period of time. In addition, by satisfying Formulas 2 and 3, it can make the thickness of the coating layer at the end part of the steel material which is relatively susceptible to occurrence and progression of corrosion equal to or thicker than the thicknesses of the coating layer at the front and back surfaces of the steel material. Compared with the case of a guard rail beam not including such a constitution, it is possible to reliably improve the corrosion resistance and service life.

[Additional Preferable Embodiments]

The guard rail beam according to embodiments of the present invention, as explained above, is characterized by an end structure where at least one edge face is covered by a coating layer and Formulas 1 to 3 are satisfied, but below, additional preferable Embodiments 1 and 2 imparting other features to a cut edge face when at least one edge face other than the edge face covered by the coating layer is a cut edge face (below, also referred to simply as "Embodiment 1", etc.) will be explained in detail.

[Embodiment 1]

The guard rail beam according to the Embodiment 1 is characterized in that in addition to the end structure where at least one edge face is covered by the coating layer and Formulas 1 to 3 are satisfied, at least one edge face, for example, two or three edge faces other than the edge face covered by the coating layer is a cut edge face, the cut edge face has a slanted surface slanted from a first surface toward a second surface of the steel material relative to a sheet thickness direction and a fractured surface or has a slanted surface slanted from a first surface toward a second surface of the steel material relative to a sheet thickness direction, a sheared surface, and a fractured surface,

a length of the fractured surface in the sheet thickness direction is 40% or less of the sheet thickness of the steel material, and
coating coverage rates at the slanted surface and the sheared surface are a total of 50 area% or more. Below, this will be explained in detail referring to the drawings.

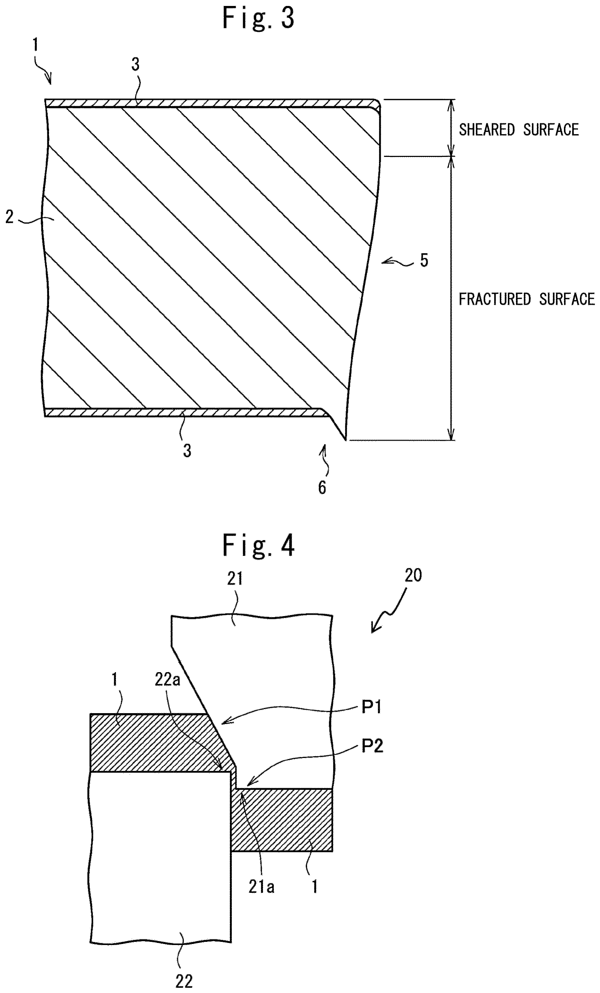

In a conventional cutting device 10, as shown in FIG. 2, the cutting edge 11a of the first blade part 11 and the cutting edge 12a of the second blade part 12 are right angle shaped. Therefore, when using such a cutting device to cut a coated steel material 1 with a top surface (first front surface) and bottom surface (second front surface) of the steel material covered by a coating layer, the coated steel material 1 is cut by being sandwiched between the first blade part 11 and second blade part 12 and pushed whereby shear force is applied to the coated steel material 1. In this case, the obtained cut edge face 5, as shown in FIG. 3, has, in order from the top surface, a sheared surface and fractured surface. Further, at this time, as shown in FIG. 3, in the fractured surface, the edge part at the second surface side is generally formed with a burr 6. The sheared surface is a smooth surface formed by movement of the first blade part 11 penetrating the coated steel material 1, while the fractured surface is a surface where the coated steel material 1 fractures starting from a crack formed in the coated steel material 1. As shown in FIG. 3, at the cut edge face 5 of the coated steel material 1, particularly when the clearance of the blade is small, the coating layer 3 does not remain almost at all at the sheared surface. At the fractured surface, the steel material 2 is exposed. For this reason, the corrosion resistance of such a cut edge face 5 is low and formation of red rust is a concern.

In relation to this, if cut by conventional right angle shaped cutting edges such as shown in FIG. 2, the sheared surface is small, therefore until the coated steel material 1 is cut, it is believed that the penetration (or infiltration) of the coating from the coating layer 3 at the top surface of the coated steel material 1 to the cut edge face 5 becomes smaller. Similarly, if cut by conventional right angle shaped cutting edges, the stress concentrates at the edge parts of the top and bottom cutting edges and cracks form as if connecting these edge parts, therefore it is believed that the timing of cutting becomes earlier and the exposed region of the steel material 2 (i.e., the fractured surface) becomes larger. Therefore, to improve the corrosion resistance of the cut edge face 5, it is important to delay the timing of cutting to make the ratio of the fractured surface where the steel material 2 is exposed relatively smaller and increase the coating coverage rate of parts of the cut edge face 5 other than the fractured surface.

As the technique for making more coating penetrate the cut edge face 5 of the coated steel material 1 at the time of cutting work, for example, it may be considered to give tapered slanted surfaces to the blade parts. In this case, at the time of pressing in the blade parts, the coating in the coating layer 3 at the top surface of the coated steel material 1 follows the movement of the blade parts and penetrates the cut edge face 5 along the slanted surfaces of the blade parts, therefore compared with the case of using right angle shaped cutting edges such as shown in FIG. 2 to cut the coated steel material 1, it is possible to raise the coating coverage rate of the cut edge face 5. However, in this case as well, if the edge parts of the top and bottom cutting edges sharply stick out, stress concentration at the edge parts is not eased. Cracks are formed seemingly connecting these edge parts. Therefore, the cutting timing is not delayed and the ratio of the fractured surface remains large.

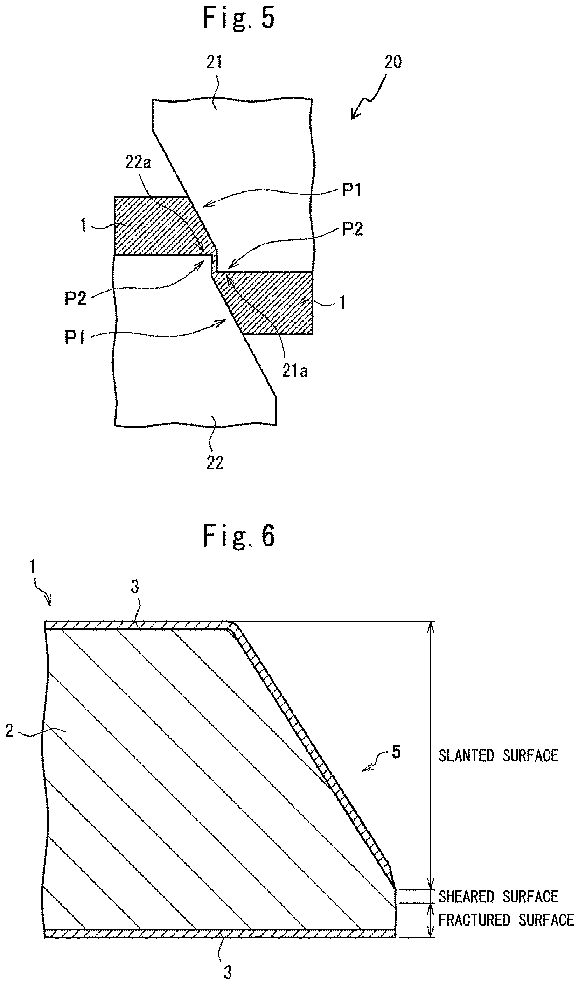

Therefore, to improve the corrosion resistance of the cut edge face, in relation to the additional preferable Embodiment 1, for example, at least one of the first blade part 21 and its cutting edge 21a or second blade part 22 and its cutting edge 22a can be made a shape having a slanted part P1 and projecting part P2. More specifically, as shown in FIG. 4, the first blade part 21 and its cutting edge 21a may be made shapes having the slanted part P1 and projecting part P2 and the second blade part 22 and its cutting edge 22a may be made right angled shapes. Further, for example, as shown in FIG. 5, both the first blade part 21 and its cutting edge 21a and the second blade part 22 and its cutting edge 22a may be made shapes having slanted parts P1 and projecting parts P2. By cutting by the cutting device 20 shown in FIGS. 4 and 5, it is possible to suppress the formation of a burr 6 while making the coating in the coating layer 3 at the top surface or bottom surface of the coated steel material 1 follow movement of any blade part to make it penetrate the cut edge face 5 along the slanted surface of the blade part when pushing in the blade part and further possible to delay the timing of cutting since the concentration of stress at the edge part of the cutting edge is also eased. As a result, it is possible to sufficiently reduce the ratio of the fractured surface where the steel material 2 is exposed and remarkably increase the coating coverage rates of parts other than the fractured surface in the cut edge face 5.

FIG. 6 is a schematic view showing a cut edge face according to the additional preferable Embodiment 1 and shows the cut edge face 5 of the coated steel material 1 cut by the pair of blade parts 21 and 22 shown in FIGS. 4 and 5. FIG. 6 shows the cut edge face 5 at the side where the top surface (first front surface) facing the slanted part P1 of the first blade part 21 of FIGS. 4 and 5 is pushed in by the slanted part P1. As shown in FIG. 6, the cut edge face 5 has, in order from the top surface, a slanted surface slanted with respect to the sheet thickness direction so as to project out from the top surface (first front surface) toward the bottom surface (second front surface), the sheared surface, and the fractured surface. The slanted surface is a surface formed along the slanted part P1 of the first blade part 21 and is slanted with respect to the sheet thickness direction from the top surface (first front surface) toward the bottom surface (second front surface) of the steel material 2. The sheared surface is a smooth surface formed by movement of the first blade part 21 penetrating the coated steel material 1 and sometimes only slightly occurs or does not occur at all. The fractured surface is a surface where the coated steel material 1 fractures starting from a crack formed in the coated steel material 1.

At the cut edge face 5 of the coated steel material 1 shown in FIG. 6, the coating layer 3 of the first front surface follows movement of the first blade part 21 and penetrates the slanted surface to cover the slanted surface. As clear from FIG. 6, by cutting the coated steel material 1 by the cutting device 20 such as shown in FIGS. 4 and 5, the ratio of the "sheared surface" where almost no coating remains and the "fractured surface" where the steel material 2 is exposed can be made extremely small compared with the case of using the conventional cutting device 10. In relation to this, the majority of the region of the cut edge face 5 can be covered by coating from the first front surface and, therefore, the corrosion resistance of the cut edge face 5 can be remarkably improved. Further, with the pair of blade parts shown in FIG. 4 and FIG. 5, the final cutting causing the fractured surface is performed by the projecting part P2 with approximately right angle edge parts, therefore formation of burrs can be suppressed.

As shown in FIG. 4, if the first blade part 21 and its cutting edge 21a are made shapes having the slanted part P1 and projecting part P2 and the second blade part 22 and its cutting edge 22a are made right angle shapes, one of the two divided coated steel materials 1 obtained after cutting has the cut edge face 5 such as shown in FIG. 6. However, the cut edge face 5 of the other coated steel material 1 is not covered by coating, therefore becomes scrap. On the other hand, if, as shown in FIG. 5, both the first blade part 21 and its cutting edge 21a and the second blade part 22 and its cutting edge 22a are shapes having the slanted part P1 and projecting part P2, both of the divided coated steel materials 1 obtained by division into two can have cut edge faces 5 such as shown in FIG. 6.

According to the Embodiment 1, the length of the fractured surface of the cut edge face 5 in the sheet thickness direction can be reduced to 40% or less of the sheet thickness of the steel material 2. By suitably adjusting the shapes of any slanted parts and projecting parts and the clearance between the first blade part 21 and second blade part 22, etc., it is possible to further reduce the length to 30% or less, 25% or less, or 20% or less of the sheet thickness of the steel material 2. In addition, if there are any slanted surfaces, it is possible to increase the coating coverage rates at the sheared surfaces to a total of 50 area% or more. Similarly, by suitably adjusting the shapes of any slanted parts and projecting parts and the clearance, it is possible to increase the rates to 60 area% or more, 80 area% or more, or 100 area%. Therefore, according to the Embodiment 1, it is possible to make the region where red rust occurs at the cut edge face 5 extremely small.

The length of the fractured surface of the cut edge face in the sheet thickness direction is calculated from a cross-sectional photograph at the cut edge face. If the fractured surface is slanted with respect to the sheet thickness direction, not the length of the slanted surface but the length of the fractured surface of the part along the sheet thickness direction is calculated. The coating coverage rates at the slanted surfaces and the sheared surface are determined in the following way. First, the cut edge face of the coated steel material is photographed. The image data is fetched by the computer. Next, at the regions other than the fractured surface (slanted surfaces and, if present, sheared surface), the overall area and coating coverage area are calculated by image processing based on the difference of luster of the coating layer and steel material. The calculated coating coverage area is divided by the overall area to thereby determine the coating coverage rates at any slanted surfaces and the sheared surface.

[Embodiment 2]

The guard rail beam according to the Embodiment 2 is characterized in that in addition to the end part structure where at least one edge face is covered by a coating layer and Formulas 1 to 3 are satisfied, at least one edge face, for example two or three edge faces other than the edge face covered by the coating layer is a cut edge face, the cut edge face has

a first slanted surface slanted from a first surface toward a center part of the steel material relative to a sheet thickness direction,
a second slanted surface slanted from a second surface toward a center part of the steel material relative to a sheet thickness direction, and
a fractured surface formed between the first slanted surface and the second slanted surface,
a length of the fractured surface in the sheet thickness direction is 40% or less of the sheet thickness of the steel material, and
coating coverage rates at the first slanted surface and the second slanted surface are a total of 50 area% or more.
Below, this will be explained in detail while referring to the drawings.

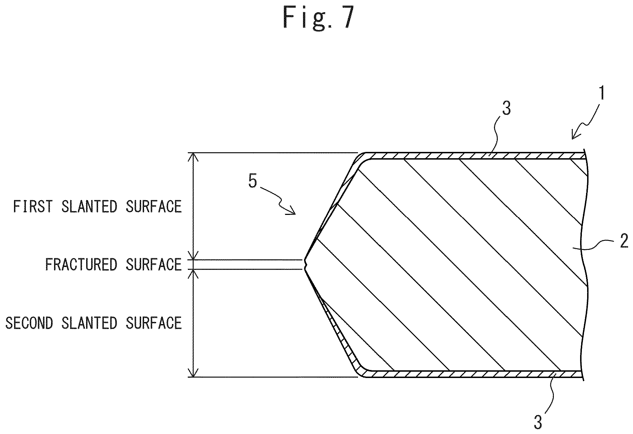

FIG. 7 is a schematic view showing a cut edge face according to an additional preferable Embodiment 2. Referring to FIG. 7, the cut edge face 5 of the coated steel material 1 has a first slanted surface slanted with respect to the sheet thickness direction so as to project out from the top surface of the steel material 2 (first front surface) toward the center part, a second slanted surface slanted with respect to the sheet thickness direction so as to project out from the bottom surface of the steel material 2 (second front surface) toward the center part, and a fractured surface formed between the first slanted surface and the second slanted surface. In addition, at the cut edge face 5 according to the Embodiment 2, in the same way as the case of the Embodiment 1 shown in FIG. 6, it will be understood that the length in the sheet thickness direction of the fractured surface at which the steel material 2 is exposed is sufficiently reduced down to a level far below 40% of the sheet thickness of the steel material 2 and, further, that the coating layer 3 of the first and second front surfaces respectively penetrate the first and second slanted surfaces whereby the first and second slanted surfaces are widely covered by the coating layer in a range greatly exceeding a total of 50 area%. Therefore, in the cut edge face according to the Embodiment 2 shown in FIG. 7 as well, in the same way as the case of the Embodiment 1, it is possible to remarkably improve the corrosion resistance of the cut edge face 5.

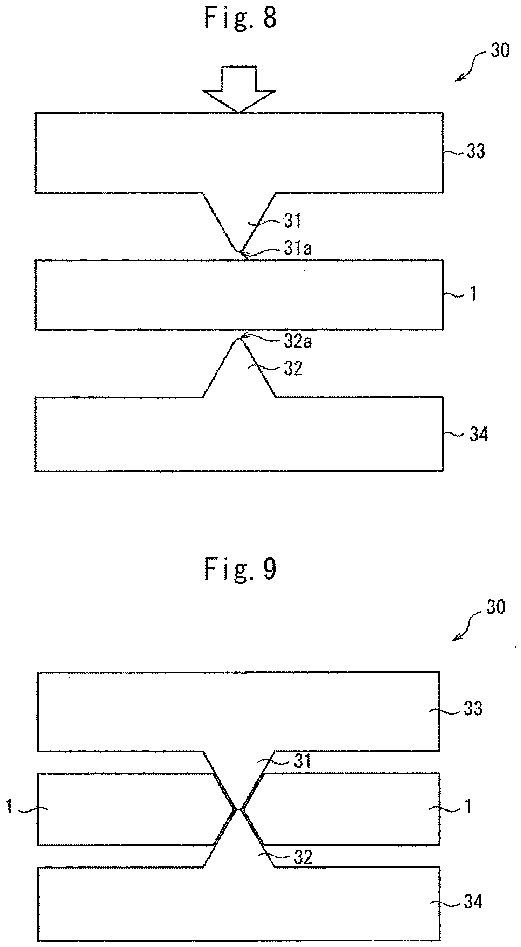

The cut edge face according to the Embodiment 2, for example, can be produced by the cutting device 30 shown in FIGS. 8 and 9. FIG. 8 is a schematic view showing the state before cutting the coated steel material 1 for obtain the cut edge face according to the additional preferable Embodiment 2 while FIG. 9 is a schematic view showing the state after cutting the coated steel material 1 by the cutting device 30 shown in FIG. 8. The cutting device 30, as shown in FIG. 8, is comprised of a punch 33 having a wedge shaped first blade part 31 provided with a cutting edge 31a and a die 34 having a wedge shaped second blade part 32 provided with a cutting edge 32a. The first blade part 31 and the second blade part 32 are arranged facing each other. By making the punch 33 move relative to the die 34 to push the wedge shaped first blade part 31 and second blade part 32 into the coated steel material 1, the coated steel material 1 is cut as shown by FIG. 9.

When pushing the first blade part 31 and second blade part 32 into the coated steel material 1, the tensile force generated between these make the coating in the coating layer 3 of the first and second front surfaces of the coated steel material 1 follow movement of the first blade part 31 and second blade part 32 to penetrate the cut edge face 5 and, as shown in FIG. 7, make the cut edge face 5 covered by the coating. Due to this, at the cut edge face 5 of the coated steel material 1, it is possible to form the first and second slanted surfaces and raise the coating coverage rates of these and to remarkably reduce the ratio of the fractured surface formed between these where the steel material 2 is exposed. Further, the shape of the cut edge face 5 of the coated steel material 1 cut by the cutting device 30 according to the present embodiment depends on the shapes of the first blade part 31 and second blade part 32. Here, the first blade part 31 and second blade part 32 are wedge shapes, therefore the cut edge face 5 of the coated steel material 1 becomes a shape having a first slanted surface and second slanted surface along the slanted surfaces of the wedge shape such as shown in FIG. 7 and a shape projecting out further the more to the center part in the sheet thickness direction. Further, by making the first blade part 31 and second blade part 32 wedge shapes, the coatings on the first and second front surfaces of the coated steel material 1 easily follow movement of the first blade part 31 and second blade part 32 along the slanted surfaces of the wedge shapes at the time of cutting the coated steel material 1 As a result, it is possible to cover a broader region than the first and second slanted surfaces by the coatings on the first and second front surfaces of the coated steel material 1.

According to the Embodiment 2, the length of the fractured surface in the sheet thickness direction of the cut edge face 5 can be reduced to 40% or less of the sheet thickness of the steel material 2. By adjusting the wedge shapes of the first blade part 31 and its cutting edge 31a and of the second blade part 32 and its cutting edge 32a to more suitable ones and by adjusting the clearance between the first blade part 31 and second blade part 32, it is possible to further reduce the length to 30% or less, 25% or less, or 20% or less of the sheet thickness of the steel material 2. In addition, it is possible to make the coating coverage rates at the first slanted surface and the second slanted surface increase to a total of 50 area% or more. Similarly, by suitably adjusting the wedge shapes and clearance, it is possible to make the rates increase to 60 area% or more, 80 area% or more, or 100 area%. Therefore, according to the Embodiment 2, the region where red rust forms at the cut edge face 5 can be made extremely small.

The length of the fractured surface in the sheet thickness direction of the cut edge face and the coating coverage rates at the first slanted surface and second slanted surface are calculated in the same way as the case of the Embodiment 1 based on the cross-sectional photo at the cut edge face and the photo of the cut edge face.

Below, examples will be used to explain the present invention in more detail, but the present invention is not limited to these examples in any way.

EXAMPLES

[Examples A]

In the examples, coated steel materials having various end structures with single edge faces covered by coating layers were produced and examined for corrosion resistance.

First, for each example, a thickness 4.0 mm (tc), width 90 mm, and length 150 mm general structure use rolled steel material SS400 was prepared, then at one edge face of the short sides of the steel material, the part down to 10 mm from the edge face was rolled down by a press or ground so as to make the average sheet thickness (te) of the steel material at a position of 1 to 10 mm from the edge face the sheet thickness shown in Table 1. Next, the obtained steel material was coated by a hot-dip coating process using a hot-dip coating bath having the chemical composition shown in Table 2. At that time, the conditions of blowing pressure of gas by gas wiping, etc., were suitably controlled particularly at the end part of the steel material to prepare a steel material comprising a coating layer having the average thicknesses of Wc, We, and Wt shown in Table 1. The tc, te, Wc, We, and Wt in Table 1 correspond to the several arithmetic averages of the measurement values such as explained above and show the values obtained by rounding off the arithmetic averages to the decimal point. Next, the two edge faces of the long sides of the steel material were sheared to remove 10 mm each to thereby prepare a width 70 mm × length 150 mm coated steel material "a" with the steel material exposed at the two edge faces of the long sides. In Example 51, to simulate partial exposure of the steel base, part of the coating of the edge face to be evaluated (edge when examining the cross-section) was ground by sandpaper (#1000 finished) and 50 μm of the steel base (as exposed length at the time of examination of the cross-section) was exposed to prepare a sample.

Further, as a reference sample for evaluation use, a coated steel material "b" having a coating composition corresponding to the above-mentioned coated steel material "a" were prepared. Specifically, first, a thickness 4.0 mm, width 70 mm, and length 150 mm general structure use rolled steel material SS400 was prepared and was coated by a hot-dip coating process using a hot-dip coating bath having a chemical composition shown in Table 2. At that time, the conditions of the blowing pressure of gas by gas wiping, etc., were suitably controlled particularly at the end part of the steel material to prepare a coated steel material "b" having the average thicknesses of Wc shown in Table 1 (the coated steel material "b" is covered by a coating layer at all of the four edge faces).

[Evaluation of Corrosion Resistance]

Each obtained coated steel material "a" was set so that the edge face of the short side adjusted in sheet thickness faced upward. On the other hand, parts up to 15 mm from the bottom edge face and left and right edge faces were sealed. In that state, the material was used for a cyclic corrosion test (CCT, JIS H 8502: 1999 neutral salt spray cycle test). During the cyclic corrosion test, the appearance of the flat part was visually examined and the number of cycles until the red rust generating area reached 3% of the flat parts was investigated. Further, each coated steel material "b" was subjected to a cyclic corrosion test in the same way in the state sealing the part up to 15 mm from all edge faces. Cases where the ratio of the number of cycles A until the red rust area ratio of the flat part of the coated steel material "a" reached 3% was 1.1 times or more of the number of cycles B until the red rust area ratio of the flat part of the coated steel material "b" reached 3% or the difference between the number of cycles A and the number of cycles B, i.e., the number of cycles A-number of cycles B, is 30 cycles or more were evaluated as "VG (very good)", cases where the number of cycles A is 1.0 time or more and less than 1.1 times the number of cycles B or number of cycles A-number of cycles B is less than 30 cycles were evaluated as "G (good)", and cases where the number of cycles A is less than 1.0 time the number of cycles B were evaluated as "P (poor). "VG" and "G" were evaluated as examples (invention examples) while "P" was evaluated as comparative examples. Explained in more detail, in the test, the corrosion resistance of a coated steel material "a" coated at the edge face of the short side adjusted in sheet thickness was evaluated compared with a coated steel material "b" made harder to corrode by coating a normal edge face of the short side not adjusted in sheet thickness and further by sealing the edge face. The results are shown in Table 1. Example 42 is one where inorganic Zr-containing chrome-free chemical conversion is performed after coating while Example 43 is one where organic V-containing urethane resin chrome-free treatment is performed after coating.

[Table 1]

Table 1

| Ex. no. | tc (mm) | te (mm) | Formula I | End processing method | Type of coating | Average thickness of coating layer (μm) | | | | | Formula 2 | Formula 3 | Corrosion resistance | Remarks |
|---|---|---|---|---|---|---|---|---|---|---|---|---|---|---|
| | | | | | | Front surface | | Back surface | | Wt | | | | |
| | | | | | | Wc | We | Wc | We | | | | | |
| 1 | 4.0 | 3.9 | OK | Rolling reduction | A | 10 | 13 | 10 | 12 | 14 | OK | OK | G | Ex. |
| 2 | 4.0 | 3.9 | OK | Rolling reduction | B | 10 | 12 | 9 | 12 | 13 | OK | OK | G | Ex. |
| 3 | 4.0 | 3.9 | OK | Rolling reduction | C | 9 | 12 | 9 | 12 | 14 | OK | OK | G | Ex. |
| 4 | 4.0 | 3.9 | OK | Rolling reduction | D | 10 | 12 | 9 | 11 | 13 | OK | OK | G | Ex. |
| 5 | 4.0 | 3.9 | OK | Rolling reduction | E | 11 | 13 | 10 | 12 | 15 | OK | OK | VG | Ex. |
| 6 | 4.0 | 3.9 | OK | Rolling reduction | F | 10 | 12 | 10 | 13 | 15 | OK | OK | VG | Ex. |
| 7 | 4.0 | 3.9 | OK | Rolling reduction | G | 11 | 13 | 10 | 13 | 14 | OK | OK | VG | Ex. |
| 8 | 4.0 | 3.9 | OK | Rolling reduction | H | 10 | 13 | 9 | 12 | 14 | OK | OK | VG | Ex. |
| 9 | 4.0 | 3.9 | OK | Rolling reduction | I | 9 | 11 | 9 | 13 | 14 | OK | OK | VG | Ex. |
| 10 | 4.0 | 3.9 | OK | Rolling reduction | J | 8 | 11 | 10 | 12 | 13 | OK | OK | VG | Ex. |
| 11 | 4.0 | 3.9 | OK | Rolling reduction | K | 10 | 12 | 10 | 13 | 14 | OK | OK | VG | Ex. |
| 12 | 4.0 | 3.9 | OK | Rolling reduction | L | 11 | 12 | 8 | 12 | 14 | OK | OK | VG | Ex. |
| 13 | 4.0 | 3.9 | OK | Rolling reduction | M | 10 | 12 | 11 | 12 | 14 | OK | OK | VG | Ex. |
| 14 | 4.0 | 3.9 | OK | Rolling reduction | N | 9 | 12 | 10 | 12 | 13 | OK | OK | VG | Ex. |
| 15 | 4.0 | 3.9 | OK | Rolling reduction | O | 9 | 11 | 10 | 13 | 14 | OK | OK | G | Ex. |
| 16 | 4.0 | 3.9 | OK | Rolling reduction | P | 9 | 11 | 10 | 12 | 13 | OK | OK | G | Ex. |
| 17 | 4.0 | 3.9 | OK | Rolling reduction | Q | 10 | 12 | 10 | 12 | 14 | OK | OK | G | Ex. |
| 18 | 4.0 | 3.8 | OK | Rolling reduction | A | 10 | 15 | 9 | 15 | 16 | OK | OK | VG | Ex. |
| 19 | 4.0 | 3.8 | OK | Rolling reduction | B | 11 | 15 | 10 | 15 | 14 | OK | OK | G | Ex. |
| 20 | 4.0 | 3.8 | OK | Rolling reduction | C | 10 | 16 | 11 | 16 | 15 | OK | OK | G | Ex. |
| 21 | 4.0 | 3.8 | OK | Rolling reduction | D | 9 | 15 | 10 | 15 | 11 | OK | OK | VG | Ex. |
| 22 | 4.0 | 3.8 | OK | Rolling reduction | E | 10 | 16 | 11 | 15 | 11 | OK | OK | VG | Ex. |
| 23 | 4.0 | 3.8 | OK | Rolling reduction | F | 11 | 16 | 11 | 16 | 12 | OK | OK | VG | Ex. |

(continued)

| Ex. no. | tc (mm) | te (mm) | Formula I | End processing method | Type of coating | Average thickness of coating layer (μm) | | | | | Formula 2 | Formula 3 | Corrosion resistance | Remarks |
|---|---|---|---|---|---|---|---|---|---|---|---|---|---|---|
| | | | | | | Front surface | | Back surface | | Wt | | | | |
| | | | | | | Wc | We | Wc | We | | | | | |
| 24 | 4.0 | 3.8 | OK | Rolling reduction | G | 11 | 15 | 10 | 15 | 11 | OK | OK | VG | Ex. |
| 25 | 4.0 | 3.8 | OK | Rolling reduction | H | 10 | 14 | 10 | 16 | 11 | OK | OK | VG | Ex. |
| 26 | 4.0 | 3.5 | OK | Rolling reduction | I | 10 | 15 | 10 | 15 | 11 | OK | OK | VG | Ex. |
| 27 | 4.0 | 3.5 | OK | Rolling reduction | J | 11 | 15 | 10 | 15 | 12 | OK | OK | VG | Ex. |
| 28 | 4.0 | 3.5 | OK | Rolling reduction | K | 10 | 15 | 9 | 14 | 11 | OK | OK | VG | Ex. |
| 29 | 4.0 | 3.5 | OK | Rolling reduction | L | 12 | 16 | 9 | 16 | 12 | OK | OK | VG | Ex. |
| 30 | 4.0 | 3.5 | OK | Grinding | M | 11 | 14 | 11 | 15 | 11 | OK | OK | VG | Ex. |
| 31 | 4.0 | 3.5 | OK | Rolling reduction | N | 10 | 15 | 10 | 15 | 11 | OK | OK | VG | Ex. |
| 32 | 4.0 | 3.5 | OK | Grinding | O | 10 | 16 | 9 | 14 | 15 | OK | OK | G | Ex. |
| 33 | 4.0 | 3.5 | OK | Grinding | P | 11 | 16 | 10 | 15 | 13 | OK | OK | G | Ex. |
| 34 | 4.0 | 3.5 | OK | Grinding | Q | 10 | 15 | 11 | 15 | 13 | OK | OK | G | Ex. |
| 35 | 4.0 | 3.5 | OK | Grinding | F | 9 | 15 | 11 | 14 | 15 | OK | OK | VG | Ex. |
| 36 | 4.0 | 3.5 | OK | Grinding | N | 11 | 15 | 10 | 15 | 15 | OK | OK | VG | Ex. |
| 37 | 4.0 | 3.9 | OK | Rolling reduction | A | 10 | 8 | 10 | 8 | 15 | NG | OK | P | Comp. ex. |
| 38 | 4.0 | 3.5 | OK | Rolling reduction | A | 10 | 15 | 11 | 15 | 8 | OK | NG | P | Comp. ex. |
| 39 | 4.0 | 3.9 | OK | Rolling reduction | A | 11 | 15 | 10 | 14 | 8 | OK | NG | P | Comp. ex. |
| 40 | 4.0 | 3.5 | OK | Rolling reduction | A | 10 | 8 | 10 | 8 | 10 | NG | OK | P | Comp. ex. |
| 41 | 4.0 | 3.9 | OK | Rolling reduction | A | 14 | 8 | 13 | 8 | 10 | NG | NG | P | Comp. ex. |
| 42 | 4.0 | 3.5 | OK | Grinding | N | 10 | 10 | 11 | 11 | 11 | OK | OK | VG | Ex. |
| 43 | 4.0 | 3.5 | OK | Grinding | N | 10 | 13 | 11 | 13 | 12 | OK | OK | VG | Ex. |
| 44 | 4.0 | 3.0 | OK | Grinding | N | 11 | 14 | 10 | 13 | 13 | OK | OK | VG | Ex. |
| 45 | 4.0 | 2.0 | NG | Grinding | N | 11 | 13 | 10 | 12 | 13 | OK | OK | - | Comp. ex. |
| 46 | 4.0 | 3.5 | OK | Grinding | N | 10 | 12 | 9 | 13 | 12 | OK | OK | VG | Ex. |
| 47 | 4.0 | 3.5 | OK | Grinding | N | 10 | 13 | 10 | 13 | 12 | OK | OK | VG | Ex. |

(continued)

| Ex. no. | tc (mm) | te (mm) | Formula I | End processing method | Type of coating | Average thickness of coating layer (μm) | | | | | Formula 2 | Formula 3 | Corrosion resistance | Remarks |
|---|---|---|---|---|---|---|---|---|---|---|---|---|---|---|
| | | | | | | Front surface | | Back surface | | Wt | | | | |
| | | | | | | Wc | We | Wc | We | | | | | |
| 48 | 4.0 | 3.5 | OK | Grinding | N | 11 | 13 | 10 | 8 | 13 | OK | OK | G | Ex. |
| 49 | 4.0 | 3.5 | OK | Grinding | N | 12 | 10 | 11 | 12 | 13 | OK | OK | G | Ex. |
| 50 | 4.0 | 3.5 | OK | Grinding | N | 11 | 13 | 9 | 8 | 10 | OK | OK | G | Ex. |
| 51 | 4.0 | 3.5 | OK | Grinding | N | 11 | 14 | 10 | 11 | 15 | OK | OK | G | Ex. |
| 52 | 4.0 | 3.5 | OK | Grinding | N | 21 | 23 | 20 | 22 | 23 | OK | OK | VG | Ex. |
| 53 | 4.0 | 3.5 | OK | Grinding | N | 30 | 32 | 29 | 31 | 31 | OK | OK | VG | Ex. |
| 54 | 4.0 | 3.5 | OK | Grinding | N | 45 | 48 | 44 | 46 | 46 | OK | OK | VG | Ex. |

[Table 2]

Table 2

| Type of coating | Chemical composition of coating layer (mass%), balance: Zn and impurities | | | | | | | | | |
|---|---|---|---|---|---|---|---|---|---|---|
| | Al | Mg | Sn | Ca | Si | Ti | Ni | Co | Fe | B |
| A | 17.0 | 6.0 | | | | | | | | |
| B | 17.0 | 14.0 | | | | | | | | |
| C | 28.0 | 6.0 | | | | | | | | |
| D | 28.0 | 13.0 | | | | | | | | |
| E | 19.0 | 6.0 | | | | | | | | |
| F | 19.0 | 6.0 | 0.20 | | | | | | | |
| G | 19.0 | 6.0 | | 0.25 | | | | | | |
| H | 19.0 | 6.0 | | | 0.15 | | | | | |
| I | 19.0 | 6.0 | | | | 0.03 | | | | |
| J | 19.0 | 6.0 | | | | | 0.25 | | | |
| K | 19.0 | 6.0 | | | | | | 0.04 | | |
| L | 19.0 | 6.0 | | | | | | | 0.8 | |
| M | 19.0 | 6.0 | | | | | | | | 0.02 |
| N | 19.0 | 6.0 | 0.20 | 0.25 | 0.15 | 0.03 | | | 0.8 | |
| O | 5.0 | 4.0 | | | | | | | | |
| P | 0.2 | | | | | | | | | |
| Q | 5.0 | 0.5 | | | | | | | | |

In Table 1, if Formula 2 is satisfied at either of the front and back surfaces, "OK (okay)" is entered under "Formula 2" while is Formula 2 is not satisfied at both of the front and back surfaces, "NG (no good)" is entered under "Formula 2". This is because if Formula 2 is satisfied at either surface, it is possible to improve the corrosion resistance of the coated steel material compared to if Formula 2 is not satisfied at both of the front and back surfaces. The same is true for Formula 3. Referring to Table 1, in each of Comparative Examples 37 to 41, at the edge face of the short side adjusted in sheet thickness, Formula 1 was satisfied, but the thickness of the coating layer at the edge face and/or its vicinity was relatively thin, therefore one or both of Formulas 2 and 3 were not satisfied and therefore the corrosion resistance fell. In contrast to this, in each of all of the examples, all of Formulas 1 to 3 were satisfied at the edge face of the short side adjusted in sheet thickness. Even compared with a coated steel material "b" where the normal edge face of the short side not adjusted in sheet thickness was coated and further the edge face was sealed to thereby make it harder to be corroded, a high corrosion resistance could be achieved. In particular, in each of Examples 48 to 50, only one front surface satisfied Formula 2. Further, in Example 50, Formula 3 was satisfied for only one front surface, but it was possible to achieve good corrosion resistance at each example. Similarly, in Example 51, despite the edge face covered by the coating layer being partially exposed, it was possible to satisfy all of Formulas 1 to 3 and achieve a high corrosion resistance. Further, in each of all of the examples besides Examples 46, 47, and 51, the coating coverage rate up to the position of 10 mm from the edge face covered by the coating layer was 100 area% and the ridge length of the edge face covered by the coating layer was the same as tc. In Example 46, the coating coverage rate up to the position of 10 mm from the edge face covered by the coating layer was 93 area% and the ridge length of the edge face covered by the coating layer was the same as tc. On the other hand, in Example 47, the coating coverage rate up to the position of 10 mm from the edge face covered by the coating layer was 100 area% and the ridge length of the edge face covered by the coating layer was 1.5 times tc. In Comparative Example 45, te was too thin and Formula 1 was not satisfied, therefore the strength of the end part fell, the edge face covered by the coating layer ended up deforming at the time of shearing the long sides, and the material was not suitable for use as a guard rail beam. For this reason, Comparative Example 45 was not evaluated for corrosion resistance.

[Examples B]

In the examples, coated steel materials having cut edge faces corresponding to the additional preferable Embodiment 1 were produced in the range evaluated as examples (invention examples) in the Examples A and examined for corrosion resistance in the cut edge faces.

First, for each example, a thickness 4.0 mm (tc), width 90 mm, and length 150 mm general structure use rolled steel material SS400 was prepared, then at one edge face of the short sides of the steel material, the part down to 10 mm from the edge face was rolled down by a press or ground so as to make the average sheet thickness (te) of the steel material at a position of 1 to 10 mm from the edge face the sheet thickness shown in Table 3. Next, the obtained steel material was coated by a hot-dip coating process using a hot-dip coating bath of the type of coating N shown in Table 2. At that time, the conditions of blowing pressure of gas by gas wiping, etc., were suitably controlled at the end part of the steel material to prepare a coated steel material having the average thicknesses of Wc, We, and Wt shown in Table 3. Finally, the two edge faces of the long sides of the steel materials were cut to remove 10 mm each using the cutting device such as shown in FIG. 4 so as to prepare a 70 mm x 150 mm coated steel material including a cut edge face having a slanted surface, sheared surface, and fractured surface such as shown in FIG. 6 at the two edge faces of the long sides. At the time of cutting, at each example, by suitably adjusting the clearance between the first blade part and the second blade part, the coating coverage rates of the slanted surface and the sheared surface and the fractured surface length in the sheet thickness direction were changed such as shown in Table 3.

[Evaluation of Corrosion Resistance at Cut Edge Face]

Each obtained coated steel material was set so that the edge face of the short side adjusted in sheet thickness faced upward and was used for a cyclic corrosion test (CCT, JIS H 8502: 1999 neutral salt spray cycle test) in the state with part up to 15 mm from the lower edge face sealed. Further, the corrosion resistance of the cut edge face (corrosion resistance due to properties of cut edge face) was evaluated. Cases where the ratio of the number of cycles A until the red rust area ratio of the flat part of the material cut by a cutting device such as shown in the above-mentioned FIG. 4 reached 3% was 1.1 times or more of the number of cycles B until the red rust area ratio of the flat part of the same coated steel material with the left and right not sealed and with just the bottom side sealed in the state as normally sheared reached 3% or the number of cycles A - number of cycles B was 30 cycles or more were evaluated as "VG (very good) " and other cases were evaluated as "P (poor)". The results are shown in Table 3.

[Table 3]

Table 3

| Ex. no. | tc (mm) | te (mm) | End processing method | Type of coating | Average thickness of coating layer (μm) | | | | | Left and right edge faces (cross-section edge faces) | | | Corrosion resistance of cut edge face |
|---|---|---|---|---|---|---|---|---|---|---|---|---|---|
| | | | | | Front surface | | Bback surface | | | | | | |
| | | | | | Wc | We | Wc | We | Wt | Coating coverage rate of slanted surface and sheared surface (area%) | Length of fractured surface of sheet thickness direction (mm) | Ratio of fractured surface length to sheet thickness (%) | |
| 101 | 4.0 | 3.9 | Rolling reduction | N | 10 | 13 | 9 | 11 | 15 | 50 | 1.6 | 40 | VG |
| 102 | 4.0 | 3.9 | Rolling reduction | N | 10 | 12 | 10 | 12 | 14 | 80 | 1.0 | 25 | VG |
| 103 | 4.0 | 3.9 | Rolling reduction | N | 11 | 12 | 9 | 12 | 14 | 100 | 1.6 | 40 | VG |
| 104 | 4.0 | 3.9 | Rolling reduction | N | 11 | 14 | 10 | 15 | 12 | 80 | 1.6 | 40 | VG |

Referring to Table 3, with shearing of the criteria for evaluation of the examples, the ratio of length of the fractured surface of the sheet thickness direction (steel material exposed part) with respect to the sheet thickness of the steel material was large (length of fractured surface by all shearing being 70% or more of steel material sheet thickness). In each of all of Examples 101 to 104, by controlling the length of the fractured surface in the sheet thickness direction to 40% or less of the sheet thickness and by controlling the coating coverage rates at the slanted surfaces and the sheared surface to a total of 50 area% or more, it was possible to cover much of the region of the cut edge face by coating and therefore reach a high corrosion resistance at the cut edge face.

[Examples C]

In the examples, coated steel materials having cut edge faces corresponding to the additional preferable Embodiment 2 were produced in the range evaluated as examples (invention examples) in the Examples A and examined for corrosion resistance in the cut edge faces.

First, for each example, a thickness 4.0 mm (tc), width 90 mm, and length 150 mm general structure use rolled steel material SS400 was prepared, then at one edge face of the short sides of the steel material, the part down to 10 mm from the edge face was rolled down by a press or ground so as to make the average sheet thickness (te) of the steel material at a position of 1 to 10 mm from the edge face the sheet thickness shown in Table 4. Next, the obtained steel material was coated by a hot-dip coating process using a hot-dip coating bath of the type of coating N shown in Table 2. At that time, the conditions of the blowing pressure of gas by gas wiping, etc., were suitably controlled particularly at the end part of the steel material to prepare a steel material comprising a coating layer having the average thicknesses of Wc, We, and Wt shown in Table 4. Finally, the two edge faces of the long sides of the steel material were sheared to remove 10 mm each using the cutting device such as FIGS. 8 and 9 to thereby prepare a 70 mm $\times$150 mm coated steel material including a cut edge face having a first slanted surface and second slanted surface slanted with respect to the sheet thickness direction so as to project out from the top surface and bottom surface of the steel material (first front surface and second front surface) toward the center parts such as shown in FIG. 7 at the two edge faces of the long sides and a fractured surface formed between the same. At the time of cutting, in each case, the clearance between the first blade part and second blade part was suitably adjusted to thereby change the coating coverage rates of the first slanted surface and second slanted surface and the fractured surface length of the sheet thickness direction such as shown in Table 4.

[Evaluation of Corrosion Resistance at Cut Edge Face]

Each obtained coated steel material was set so that the edge face of the short side adjusted in sheet thickness faced upward and was used for a cyclic corrosion test (CCT, JIS H 8502: 1999 neutral salt spray cycle test) in the state with the part up to 15 mm from the lower edge face sealed. Further, the corrosion resistance of the cut edge face (corrosion resistance due to properties of cut edge face) was evaluated. Cases where the ratio of the number of cycles A until the red rust area ratio of the flat part of the material cut by a cutting device such as shown in the above-mentioned FIGS. 8 and 9 reached 3% was 1.1 times or more of the number of cycles B until the red rust area ratio of the flat part of the same coated steel material with the left and right not sealed and with just the bottom side sealed in the state as normally sheared reached 3% or the number of cycles A - number of cycles B was 30 cycles or more were evaluated as "VG (very good) " and other cases were evaluated as "P (poor)". The results are shown in Table 4.

[Table 4]

Table 4

| Ex. no. | tc (mm) | te (mm) | End processing method | Type of coating | Average thickness of coating layer (μm) | | | | | Left and right edge faces (cross-section edge faces) | | | Corrosion resistance of cut edge face |
|---|---|---|---|---|---|---|---|---|---|---|---|---|---|
| | | | | | Front surface | | Back surface | | Wt | Coating coverage rate of slanted surface and sheared surface (area%) | Length of fractured surface of sheet thickness direction (mm) | Ratio of fractured surface length to sheet thickness (%) | |
| | | | | | Wc | We | Wc | We | | | | | |
| 201 | 4.0 | 3.9 | Rolling reduction | N | 10 | 11 | 10 | 13 | 14 | 50 | 1.6 | 40 | VG |
| 202 | 4.0 | 3.9 | Rolling reduction | N | 11 | 13 | 10 | 12 | 14 | 100 | 0.8 | 20 | VG |
| 203 | 4.0 | 3.9 | Rolling reduction | N | 10 | 12 | 9 | 12 | 14 | 80 | 1.4 | 35 | VG |
| 204 | 4.0 | 3.9 | Rolling reduction | N | 10 | 15 | 9 | 14 | 12 | 80 | 1.0 | 25 | VG |

Referring to Table 4, with shearing of the criteria for evaluation of the examples, the ratio of the length of the fractured surface (steel material exposed part) in the sheet thickness direction with respect to the sheet thickness of the steel material was large (length of fractured surface was 70% or more of sheet thickness of steel material by all shearing), while in all of Examples 201 to 204, by controlling the length of the fractured surface in the sheet thickness direction to 40% or less of the sheet thickness and by controlling the coating coverage rates at the first slanted surface and the second slanted surface to a total of 50 area% or more, it is possible to cover much of the region of the cut edge face by coating and therefore it is possible to achieve high corrosion resistance at the cut edge face.

REFERENCE SIGNS LIST

1 coated steel material
2 steel material
3 coating layer
4 edge face
5 cut edge face
6 burr
10, 20, 30 cutting device
11, 21, 31 first blade part
11a, 21a, 31a cutting edge of first blade part
12, 22, 32 second blade part
12a, 22a, 32a cutting edge of second blade part
33 punch
34 die

## Claims

1. A guard rail beam comprised of a coated steel material comprising a steel material and coating layer formed on both surfaces of the steel material and made of a Zn-based coating, wherein
at least one edge face of the steel material is covered by the coating layer and satisfies following Formulas 1 to 3:

$$0.60 \times tc \leq te < tc \quad \cdots \quad \text{Formula 1}$$

$$We \geq Wc \quad \cdots \quad \text{Formula 2}$$

$$Wt \geq Wc \quad \cdots \quad \text{Formula 3}$$

where

tc is an average sheet thickness (mm) of the steel material at a position inside from the edge face covered by the coating layer by 10 mm or more,
te is an average sheet thickness (mm) of the steel material at a position of 1 to 10 mm from the edge face covered by the coating layer,
We is an average thickness (μm) per surface of the coating layer at a position of 1 to 10 mm from the edge face covered by the coating layer,
Wc is an average thickness (μm) per surface of the coating layer at a position inside from the edge face covered by the coating layer by 10 mm or more, and
Wt is an average thickness (μm) of the coating layer at the edge face covered by the coating layer.

2. The guard rail beam according to claim 1, wherein the coating layer is a Zn-Al-Mg-based coating.

3. The guard rail beam according to claim 2, wherein the coating layer has a chemical composition comprising, by mass%,

Al: more than 15.0 to 30.0%,
Mg: more than 5.0 to 15.0%,
Sn: 0 to 0.70%,
Ca: 0 to 0.60%,
Si: 0 to 0.75%,
Ti: 0 to 0.25%,
Ni: 0 to 1.00%,
Co: 0 to 0.25%,
Fe: 0 to 5.0%,
B: 0 to 0.50%, and
balance: Zn and impurities.

**4.** The guard rail beam according to any one of claims 1 to 3, arranged so that the edge face covered by the coating layer faces upward relative to a ground surface.

**5.** The guard rail beam according to any one of claims 1 to 3, wherein a coating coverage rate up to a position of 10 mm from the edge face covered by the coating layer is 90 area% or more.

**6.** The guard rail beam according to any one of claims 1 to 3, wherein at least one edge face other than the edge face covered by the coating layer is a cut edge face, the cut edge face has a slanted surface slanted from a first surface toward a second surface of the steel material relative to a sheet thickness direction and a fractured surface or has a slanted surface slanted from a first surface toward a second surface of the steel material relative to a sheet thickness direction, a sheared surface, and a fractured surface,

a length of the fractured surface in the sheet thickness direction is 40% or less of a sheet thickness of the steel material, and
coating coverage rates at the slanted surface and the sheared surface are a total of 50 area% or more.

**7.** The guard rail beam according to any one of claims 1 to 3, wherein at least one edge face other than the edge face covered by the coating layer is a cut edge face, the cut edge face has

a first slanted surface slanted from a first surface toward a center part of the steel material relative to a sheet thickness direction,
a second slanted surface slanted from a second surface toward a center part of the steel material relative to a sheet thickness direction, and
a fractured surface formed between the first slanted surface and the second slanted surface,
a length of the fractured surface in the sheet thickness direction is 40% or less of a sheet thickness of the steel material, and
coating coverage rates at the first slanted surface and the second slanted surface are a total of 50 area% or more.

# Fig. 1

1
A
B
We
Wc
2
4
te
tc
3
Wt
REFERENCE POSITION OF END FACE

# Fig. 2

10
11
1
12a
11a
1
12

Fig. 3

1
3
SHEARED SURFACE
2
5
FRACTURED SURFACE
3
6

Fig. 4

21
20
1
22a
P1
P2
21a
1
22

Fig. 5

21
20
22a
P1
1
P2
P2
1
P1
21a
22

Fig. 6

1
3
2
5
SLANTED SURFACE
SHEARED SURFACE
FRACTURED SURFACE
3

Fig. 7

1
3
5
FIRST SLANTED SURFACE
FRACTURED SURFACE
SECOND SLANTED SURFACE
2
3

Fig. 8

30
33
31
31a
1
32a
32
34

Fig. 9

30
33
31
1
1
32
34

## INTERNATIONAL SEARCH REPORT

International application No.
**PCT/JP2023/014253**

**A. CLASSIFICATION OF SUBJECT MATTER**

***C23C 2/06***(2006.01)i; ***C22C 18/04***(2006.01)i; ***E01F 15/04***(2006.01)i
FI: C23C2/06; C22C18/04; E01F15/04 A

According to International Patent Classification (IPC) or to both national classification and IPC

**B. FIELDS SEARCHED**

Minimum documentation searched (classification system followed by classification symbols)

C23C2/06; C22C18/04; E01F15/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-120461 A (NISSHIN KOKAN KK) 12 May 2005 (2005-05-12) | 1-7 |
| A | JP 2017-209727 A (AMADA HOLDINGS CO LTD) 30 November 2017 (2017-11-30) | 1-7 |
| A | CN 101831600 A (PANGANG GROUP PANZHIHUA STEEL & VANADIUM CO., LTD.) 15 September 2010 (2010-09-15) | 1-7 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/014253**

| Patent document cited in search report | Publication date (day/month/year) | Patent family member(s) | Publication date (day/month/year) |
|---|---|---|---|
| JP 2005-120461 A | 12 May 2005 | (Family: none) | |
| JP 2017-209727 A | 30 November 2017 | US 2019/0176270 A1 | |
| | | US 2020/0346306 A1 | |
| | | WO 2017/200005 A1 | |
| | | EP 3459675 A1 | |
| | | TW 201801840 A | |
| | | CA 3024686 A | |
| | | AU 2017266268 A | |
| | | SG 11201810258T A | |
| | | KR 10-2019-0013738 A | |
| | | CN 109526213 A | |
| | | BR 112018073668 A | |
| | | MX 2018013980 A | |
| | | RU 2724253 C | |
| CN 101831600 A | 15 September 2010 | (Family: none) | |

Form PCT/ISA/210 (patent family annex) (January 2015)

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description


- JP 6122953 A